# EUROPEAN PATENT APPLICATION

(11) **EP 4 350 951 A1**
(43) Date of publication of application: **10.04.2024**
(21) Application number: 22199391.8
(22) Date of filing: 03.10.2022
(51) Int. Cl.: H02K 1/18, H02K 5/24

(54) **ELECTRIC MACHINE WITH REDUCED VIBRATIONS OF THE STATOR IN THE HOUSING**

(71) Applicant: Valeo eAutomotive Germany GmbH, 91056 Erlangen (DE)
(72) Inventor: Ehrlich, Christian, 91056 Erlangen (DE)
(74) Representative: Valeo Powertrain Systems

(57) **Abstract**

An electric machine (1) is proposed, which comprises a housing (2) and a stator (5) with a stator lamination pack (6, 6a..6e), which is bolted to the housing (2) by means of a plurality of stator bolts (7) being unevenly distributed around a rotational stator axis (A) of the stator (5). Unevenly distributed means different angles between at least two adjacent stator bolts (7). Furthermore, the electric machine comprises bearings (8a, 8b) arranged in the housing (2) and a rotor (9) with a rotor shaft (10), a rotor lamination pack (11) and magnets or rotor windings arranged in the rotor lamination pack (11), wherein the rotor (9) is rotatably arranged in the stator (5) around the stator axis (A) by means of the bearings (8a, 8b). Moreover, an electric vehicle (14) with such an electric machine (1) is disclosed.

## Description

### TECHNICAL FIELD

The invention relates to an electric machine, which comprises a housing, a stator, bearings arranged in the housing and a rotor. The stator comprises a stator lamination pack and stator windings arranged in the stator lamination pack and is bolted to the housing by means of a plurality of stator bolts being arranged around a rotational stator axis of the stator. The rotor comprises a rotor shaft, a rotor lamination pack and magnets or rotor windings arranged in the rotor lamination pack and is rotatably arranged in the stator around the stator axis by means of the bearings. Moreover, the invention relates to an electric vehicle with a drivetrain, comprising an electric machine of the above kind, which is provided to propel the electric vehicle.

### BACKGROUND ART

During operation of the electric machine, varying electromagnetic forces act on the stator what can cause deformations of the stator and induce vibrations in the same. If no measures are taken, large excursions of the stator or stator lamination pack may occur, in particular at a resonance frequency. This may lead to malfunction and even to damage of the electric machine. Accordingly, large excursions have to be avoided. To avoid or reduce that effect, often the stator is pressed into a comparable rigid housing. Unfortunately, a rigid housing increases weight of the electric machine and thus often is unwanted. In some applications, it is even unwanted to have a press fit between the stator and the housing at all.

Alternatively or in addition, the stator can be bolted to the housing. Unfortunately, a comparably high number of stator bolts is needed to avoid or at least substantially limit deformations and vibrations of the stator what increases the bill of materials. This is particularly true in applications, where the stator bolts are lead through the whole stator or stator lamination pack and fix the stator to the housing on only one front face. Even worse, known kinds of fixation provide no resistance at all against some critical eigen modes of the stator, for example against second mode (ovalization), leading to large vibration amplitudes for example in the eights order.

### DISCLOSURE OF INVENTION

Accordingly, an object of the invention is to provide an improved electric machine, and an improved electric vehicle. In particular, a solution shall be proposed, which avoids heavy vibrations of the stator or stator lamination pack, which allows for fragile housings and which needs only a small number of stator bolts.

The object of the invention is solved by an electric machine as disclosed in the opening paragraph, wherein the stator bolts are unevenly distributed around the stator axis or in other words wherein an angular distribution of the stator bolts around the stator axis is uneven.

In addition, the object of the invention is solved by an electric vehicle having a drivetrain comprising an electric machine of the above kind, which is provided to propel the electric vehicle.

For example, at least two angles, each between two adjacent stator bolts and measured from the stator axis are different. In particular, all angles, each between two adjacent stator bolts and measured from the stator axis each can be different. By the proposed measures, vibrations of the stator or stator lamination pack can considerably be reduced compared to prior art solution. The effect is based on the asymmetry of the bolt pattern, which hinders or at least reduces vibrations of the stator or stator lamination pack. Accordingly, the proposed solution allows for fragile housings and needs only a small number of stator bolts.

In particular, the proposed solution relates to an even number of stator bolts. Hence, for example, the stator can be bolted to the housing by means of four, six or a higher even number of stator bolts.

In particular, the proposed solution moreover relates to electric machines, where the stator comprises two front faces, wherein just one of the same contacts the housing. Even more particularly, the stator comprises a circumferential area between the two front faces, and the electric machine comprises a gap between said circumferential area of the stator and the housing. The proposed measures allow for fixing the stator to the housing in a straightforward way without the need of a press fit between the stator and the housing and without the need of comparably thick housing walls. In turn, weight of the electric machine can be reduced compared to prior art solution what is particularly useful in mobile applications like in electric cars.

In one embodiment, the stator bolts are arranged on a circle around the stator axis. Accordingly, the bolt pattern is easy to produce. However, the stator bolts may also have different distances to the stator axis.

Advantageously, the stator can comprise four stator bolts with four angles in-between, wherein a first angle is in a range of 35° to 55°, a second angle is in a range of 115° to 135°, a third angle is in a range of 75° to 95° and a fourth angle is in a range of 100° to 120°. In particular, the first angle can be 43°, the second angle can be 124°, the third angle can be 84° and the fourth angle can be 109°. The first angle can be located vis-à-vis of the third angle and the second angle can be located vis-à-vis of the fourth angle. By the proposed measures, the vibration of a stator or stator lamination pack can substantially be reduced compared to prior art solutions what allows for fragile housings, a small number of stator bolts and low weight of an electric machine.

In another advantageous solution, the stator can comprise six stator bolts with six angles in-between, wherein
- a first angle is in a range of 35° to 55°, a second angle is in a range of 55° to 75°, a third angle is in a range of 80° to 100°, a fourth angle is in a range of 100° to 125°, a fifth angle is in a range of 15° to 35° and a sixth angle is in a range of 15° to 35° or
- a first angle is in a range of 35° to 55°, a second angle is in a range of 50° to 75°, a third angle is in a range of 75° to 95°, a fourth angle is in a range of 55° to 75°, a fifth angle is in a range of 30° to 50° and a sixth angle is in a range of 50° to 70°.

In particular, the first angle can be 46°, the second angle can be 66°, the third angle can be 90°, the fourth angle can be 111°, the fifth angle can be 24° and sixth angle can be 23°. In another concrete embodiment, the first angle can be 46°, the second angle can be 62°, the third angle can be 86°, the fourth angle can be 66°, the fifth angle can be 41° and sixth angle can be 59°. The first angle can be located vis-à-vis of the fourth angle, the second angle can be located vis-à-vis of the fifth angle and the third angle can be located vis-à-vis of the sixth angle. By the proposed measures, the vibration of a stator or stator lamination pack can substantially be reduced compared to prior art solutions what allows for fragile housings, a small number of stator bolts and low weight of an electric machine as well.

### BRIEF DESCRIPTION OF DRAWINGS

The invention now is described in more detail hereinafter with reference to particular embodiments, which the invention however is not limited to.
- Fig. 1: shows a cross sectional view of an exemplary electric machine;
- Fig. 2: shows a front view of a prior art stator lamination pack with four evenly distributes holes for stator bolts;
- Fig. 3: shows a deformation of a vibrating prior art stator lamination pack;
- Fig. 4: shows a front view of an exemplary stator lamination pack with four unevenly distributed holes for the stator bolts;
- Fig. 5: shows graphs of the force acting on the free end of the vibrating stator over the frequency;
- Fig. 6: shows graphs of the velocity of the free end of the vibrating stator over the frequency;
- Fig. 7: shows a front view of a prior art stator lamination pack with six evenly distributed holes for the stator bolts;
- Fig. 8: shows a front view of a first example of a stator lamination pack with six unevenly distributed holes for stator bolts;
- Fig. 9: shows a front view of a second example of a stator lamination pack with six unevenly distributed holes for stator bolts and
- Fig. 10: shows a schematic view of an electric vehicle.

### DETAILED DESCRIPTION

Generally, same parts or similar parts are denoted with the same/similar names and reference signs. The features disclosed in the description apply to parts with the same/similar names respectively same/similar reference signs. Indicating the orientation and relative position is related to the associated figure.

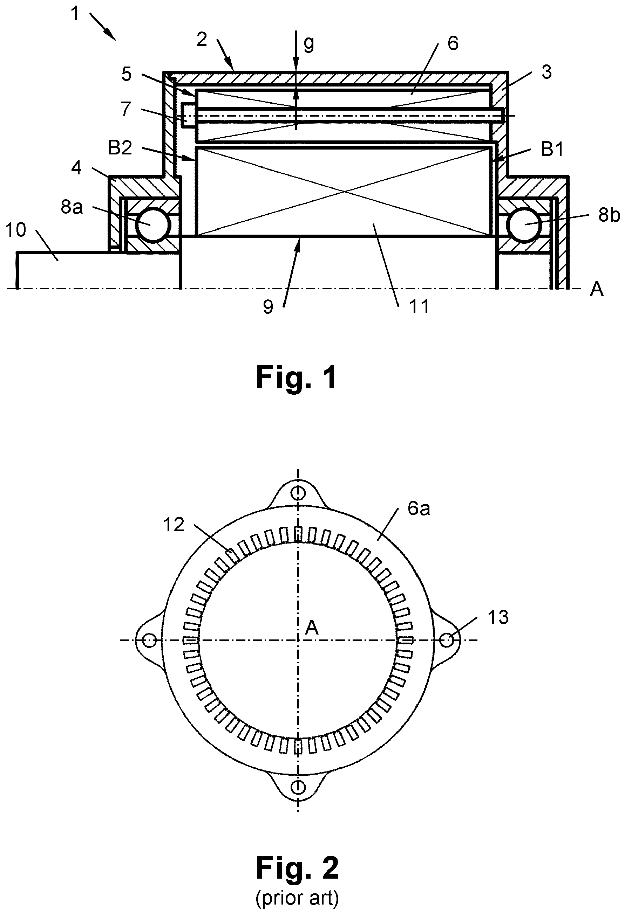

Fig. 1 shows a cross sectional view of an exemplary electric machine 1. The electric machine 1 comprises a housing 2 with a first (back) housing part 3 and a second (front) housing part 4. Furthermore, the electric machine 1 comprises a stator 5 with a stator lamination pack 6 and stator windings (not shown in Fig. 1) arranged in the stator lamination pack 6. The stator 5 is bolted to the housing 2, in detail to the first housing part 3, by means of a plurality of stator bolts 7, which are arranged around a rotational stator axis A of the stator 5. Further on, the electric machine 1 comprises (rolling) bearings 8a, 8b arranged in the housing 2. In addition, the electric machine 1 comprises a rotor 9 with a rotor shaft 10, a rotor lamination pack 11 and magnets or rotor windings (not shown in Fig. 1) arranged in the rotor lamination pack 11, wherein the rotor 9 is rotatably arranged in the stator 5 around the stator axis A by means of the bearings 8a, 8b.

Fig. 1 also shows that the stator 5 comprises a first front face B1 on the right side, a second opposite front face B2 on the left side and a circumferential area between the two front faces B1, B2. In this example, just the first front face B1 of the stator 5 contacts the housing 2, in detail the first housing part 3. In addition, in this example, there is an optional gap g between said circumferential area of the stator 5 and the housing 2. Accordingly, the left side of the stator 5 is not fixed to the housing 2 at all.

Fig. 2 shows a front view of an exemplary prior art stator lamination pack 6a with stator grooves 12 and with holes 13 for the stator bolts 7, which are evenly distributed around the stator axis A. This kind of fixation provides no resistance at all against some critical eigen modes of the stator 5, for example against second mode (ovalization), leading to large vibration amplitudes for example in the eights order.

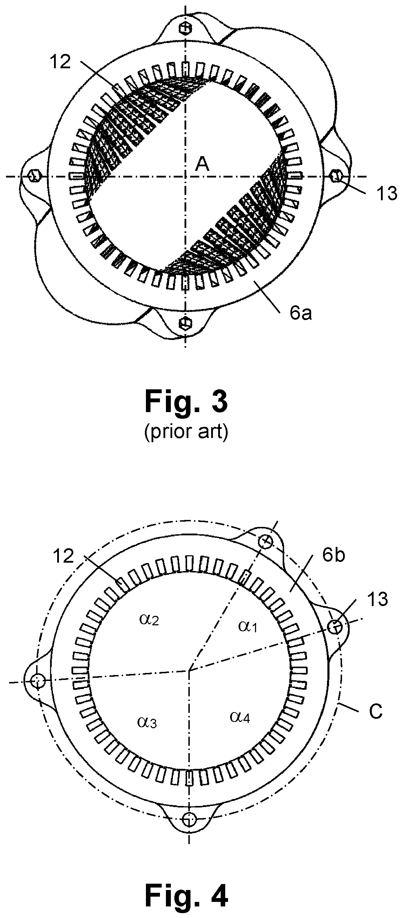

Fig. 3 illustrates what happens to the prior art stator lamination pack 6a when its left free end vibrates during operation of the electric machine 1 caused by varying electromagnetic forces acting on the stator 5. In detail, Fig. 3 shows a symmetric bending mode of the stator lamination pack 6a and an oval deformation of the free end of the stator lamination pack 6a. In Fig. 3, the positions of the left ends of the stator bolts 7 move as well. However, this is no necessary condition and there are oval deformations of the stator lamination pack 6a, where the stator bolts 7 keep their positions.

It is clear that large excursions may lead to malfunction and even to damage of the electric machine 1, for example when the stator lamination pack 6a locally touches the rotor 9 during operation of the electric machine 1. Accordingly, large excursions have to be avoided.

Fig. 4 shows a possible solution for the above problem, in detail a front view of an exemplary stator lamination pack 6b, where the stator bolts 7 and their mounting holes 13 are unevenly distributed around the stator axis A. In other words, an angular distribution of the stator bolts 7 and the holes 13 around the stator axis A is uneven. In this example, the stator 5 comprises four stator bolts 7 with four angles α₁..α₄ in-between. Accordingly, at least two angles α₁..α₄, each between two adjacent stator bolts 7 and measured from the stator axis A are different. In this particular example, even all angles α₁..α₄, each between two adjacent stator bolts 7 and measured from the stator axis A are different. In detail, the first angle α₁ can be in a range of 35° to 55°, the second angle α₂ can be in a range of 115° to 135°, the third angle α₃ can be in a range of 75° to 95° and the fourth angle α₄ can be in a range of 100° to 120° in this example. In particular, the first angle α₁ can be 43°, the second angle α₂ can be 124°, the third angle α₃ can be 84° and the fourth angle α₄ can be 109°. These values provide very good results against unwanted vibrations. Concretely, the first angle α₁ is located vis-à-vis of the third angle α₃ and the second angle α₂ is located vis-à-vis of the fourth angle α₄ in this example. Moreover, Fig. 4 shows that the stator bolts 7 are arranged on a circle C around the stator axis A. However, this is no necessary condition and the stator bolts 7 may have different distances to the stator axis A.

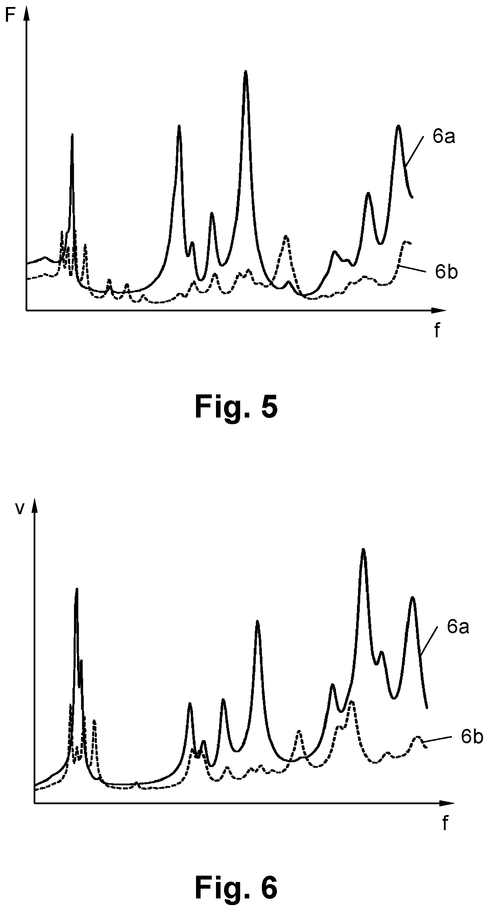

Fig. 5 shows graphs of the force F acting on the free end of the stator 5 over the frequency f for the prior art stator lamination pack 6a of Figs. 2 and 3 (continuous line) and the proposed stator lamination pack 6b of Fig. 4 (broken line). Moreover, Fig. 6 shows graphs of the velocity v of the free end of the stator 5 over the frequency f for the prior art stator lamination pack 6a of Figs. 2 and 3 (continuous line) and the proposed stator lamination pack 6b of Fig. 4 (broken line) both for vibrations in the eights order. Figs. 5 and 6 clearly show the advantage of the proposed stator lamination pack 6b over the prior art stator lamination pack 6a because both the force F and the velocity v are considerably lower for the proposed stator lamination pack 6b.

Generally, the uneven distribution of the stator bolts 7 can apply to an even number of stator bolts 7. However, the proposed solution is not limited to four stator bolts 7 but for example also apply to six stator bolts 7.

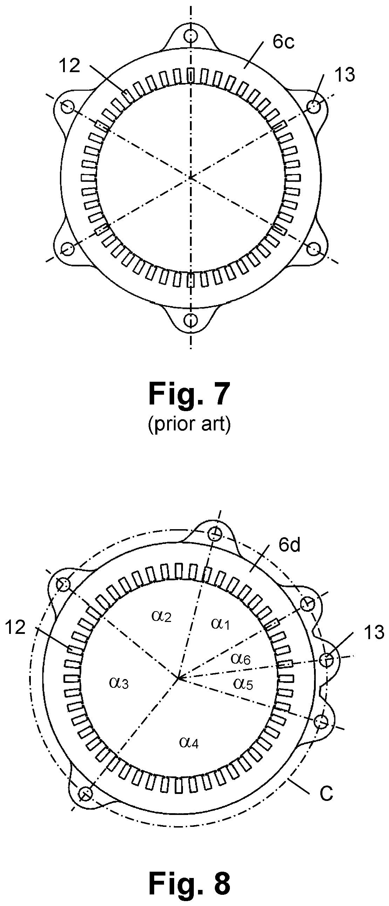

Fig. 7 is similar to Fig. 2 but shows a front view of an exemplary prior art stator lamination pack 6c with six holes 13 for the stator bolts 7, which are evenly distributed around the stator axis A.

Fig. 8 shows a possible solution for the given problem, in detail a front view of an exemplary stator lamination pack 6d, where the six stator bolts 7 and holes 13 are unevenly distributed around the stator axis A. Again, at least two angles α₁..α₆, each between two adjacent stator bolts 7 and measured from the stator axis A are different. In this particular example, even all angles α₁..α₆, each between two adjacent stator bolts 7 and measured from the stator axis A are different. In detail, the first angle α₁ can be in a range of 35° to 55°, the second angle α₂ can be in a range of 55° to 75°, the third angle α₃ can be in a range of 80° to 100°, the fourth angle α₄ can be in a range of 100° to 125°, the fifth angle α₅ can be in a range of 15° to 35° and the sixth angle α₆ can be in a range of 15° to 35° in this example. In particular, the first angle α₁ can be 46°, the second angle α₂ can be 66°, the third angle α₃ can be 90°, the fourth angle α₄ can be 111°, the fifth angle α₅ can be 24° and sixth angle α₆ can be 23°. These values provide very good results against unwanted vibrations. Concretely, the first angle α₁ is located vis-à-vis of the fourth angle α₄, the second angle α₂ is located vis-à-vis of the fifth angle α₅ and the third angle α₃ is located vis-à-vis of the sixth angle α₆ in this example. Moreover, Fig. 8 shows that the stator bolts 7 are arranged on a circle C around the stator axis A. However, this is no necessary condition and the stator bolts 7 may have different distances to the stator axis A.

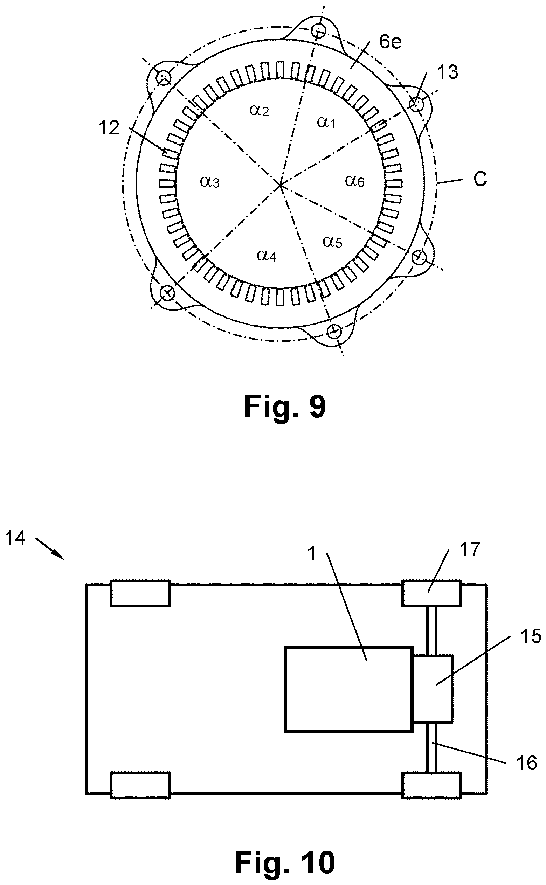

Fig. 9 shows a stator lamination pack 6e which is similar to the stator lamination pack 6d shown in Fig. 8 but however with different angles α₁..α₆. In detail, the first angle α₁ can be in a range of 35° to 55°, the second angle α₂ can be in a range of 50° to 75°, the third angle α₃ can be in a range of 75° to 95°, the fourth angle α₄ can be in a range of 55° to 75°, the fifth angle α₅ can be in a range of 30° to 50° and the sixth angle α₆ can be in a range of 50° to 70° in this example. In particular, the first angle α₁ can be 46°, the second angle α₂ can be 62°, the third angle α₃ can be 86°, the fourth angle α₄ can be 66°, the fifth angle α₅ can be 41° and sixth angle α₆ can be 59°. These values provide very good results against unwanted vibrations as well. Again, the first angle α₁ is located vis-à-vis of the fourth angle α₄, the second angle α₂ is located vis-à-vis of the fifth angle α₅ and the third angle α₃ is located vis-à-vis of the sixth angle α₆ in this example, and again the stator bolts 7 are arranged on an optional circle C around the stator axis A.

Fig. 10 finally shows an electric vehicle 14, which comprises an electric machine 1 as outlined above, which is connected to a gearbox 15. The gearbox 15 is mechanically coupled to wheels 17 of the electric vehicle 14 by means of side shafts 16. The electric motor 1 may be provided for powering the electric vehicle 1 permanently in a pure electric car or intermittently, e.g. in combination with a combustion engine in a hybrid car.

It is noted that the invention is not limited to the embodiments disclosed hereinbefore, but combinations of the different variants are possible. In reality, the electric machine 1 and the electric vehicle 14 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1: electric machine
- 2: housing
- 3: first (back) housing part
- 4: second (front) housing part
- 5: stator
- 6, 6a..6e: stator lamination pack
- 7: stator bolts
- 8a, 8b: bearing
- 9: rotor
- 10: rotor shaft
- 11: rotor lamination pack
- 12: stator groove
- 13: hole for stator bolt
- 14: electric vehicle
- 15: gearbox
- 16: side shaft
- 17: wheel
- A: stator axis
- B1, B2: front face of stator
- C: circle
- g: gap
- α₁..α₆: angles between stator bolts
- v: velocity
- F: force
- f: frequency

## Claims

1. Electric machine (1), comprising
- a housing (2),
- a stator (5), which comprises a stator lamination pack (6, 6a..6e) and stator windings arranged in the stator lamination pack (6, 6a..6e), wherein the stator (5) is bolted to the housing (2) by means of a plurality of stator bolts (7) being arranged around a rotational stator axis (A) of the stator (5),
- bearings (8a, 8b) arranged in the housing (2) and
- a rotor (9), which comprises a rotor shaft (10), a rotor lamination pack (11) and magnets or rotor windings arranged in the rotor lamination pack (11), wherein the rotor (9) is rotatably arranged in the stator (5) around the stator axis (A) by means of the bearings (8a, 8b), **characterized in that** the stator bolts (7) are unevenly distributed around the stator axis (A).

2. Electric machine (1) as claimed in claim 1, **characterized in that** the stator (5) is bolted to the housing (2) by means of an even number of stator bolts (7).

3. Electric machine (1) as claimed in claim 1 or 2, **characterized in that** the stator bolts (7) are arranged on a circle (C) around the stator axis (A).

4. Electric machine (1) as claimed in any one of claims 1 to 3, **characterized in that** at least two angles (α₁..α₆), each between two adjacent stator bolts (7) and measured from the stator axis (A) are different.

5. Electric machine (1) as claimed in any one of claims 1 to 3, **characterized in that** all angles (α₁..α₆), each between two adjacent stator bolts (7) and measured from the stator axis (A) each are different.

6. Electric machine (1) as claimed in any one of claims 1 to 5, **characterized in that** the stator (5) comprises two front faces (B1, B2), wherein just one (B1) of the same contacts the housing (2).

7. Electric machine (1) as claimed in claim 6, **characterized in that**
- the stator (5) comprises a circumferential area between the two front faces (B1, B2) and
- the electric machine (1) comprises a gap (g) between said circumferential area of the stator (5) and the housing (2).

8. Electric machine (1) as claimed in any one of claims 1 to 7, **characterized in that** the stator (5) comprises four stator bolts (7) with four angles (α₁..α₄) in-between, wherein a first angle (α₁) is in a range of 35° to 55°, a second angle (α₂) is in a range of 115° to 135°, a third angle (α₃) is in a range of 75° to 95° and a fourth angle (α₄) is in a range of 100° to 120°.

9. Electric machine (1) as claimed in claim 8, **characterized in that** the first angle (α₁) is located vis-à-vis of the third angle (α₃) and the second angle (α₂) is located vis-à-vis of the fourth angle (α₄).

10. Electric machine (1) as claimed in any one of claims 1 to 7, **characterized in that** the stator (5) comprises six stator bolts (7) with six angles (α₁..α₆) in-between, wherein
- a first angle (α₁) is in a range of 35° to 55°, a second angle (α₂) is in a range of 55° to 75°, a third angle (α₃) is in a range of 80° to 100°, a fourth angle (α₄) is in a range of 100° to 125°, a fifth angle (α₅) is in a range of 15° to 35° and a sixth angle (α₆) is in a range of 15° to 35° or
- a first angle (α₁) is in a range of 35° to 55°, a second angle (α₂) is in a range of 50° to 75°, a third angle (α₃) is in a range of 75° to 95°, a fourth angle (α₄) is in a range of 55° to 75°, a fifth angle (α₅) is in a range of 30° to 50° and a sixth angle (α₆) is in a range of 50° to 70°.

11. Electric machine (1) as claimed in claim 10, **characterized in that** the first angle (α₁) is located vis-à-vis of the fourth angle (α₄), the second angle (α₂) is located vis-à-vis of the fifth angle (α₅) and the third angle (α₃) is located vis-à-vis of the sixth angle (α₆).

12. Electric vehicle (14) with a drivetrain comprising an electric machine (1) as claimed in any one of claims 1 to 11, which is provided to propel the electric vehicle (14).
